# EUROPEAN PATENT APPLICATION

(11) **EP 4 541 575 A1**
(43) Date of publication of application: **23.04.2025**
(21) Application number: 24206520.9
(22) Date of filing: 14.10.2024
(51) Int. Cl.: B32B 5/02, B32B 5/26

(54) **FLEXIBLE FILM ARTICLE**

(30) Priority: 16.10.2023 TW 112139448; 15.12.2023 TW 112149089; 01.03.2024 TW 113107568
(71) Applicant: Huang, Chen-Cheng, Taipei City 10595 (TW); Huang, Pao-Hao, Taipei City 10595 (TW); Huang, Pao-Han, Taipei City 10595 (TW)
(72) Inventor: Huang, Chen-Cheng, Taipei City 10595 (TW); Huang, Pao-Hao, Taipei City 10595 (TW); Huang, Pao-Han, Taipei City 10595 (TW)
(74) Representative: Mewburn Ellis LLP

(57) **Abstract**

A flexible film article includes a first layer body (3a) that is a sheet body made of a thermoplastic material, and that has a first surface side (31) formed with a plurality of smooth regions (311), and a second surface side (32) opposite to the first surface side (31) and having a fibrous structure (33).

## Description

The present disclosure relates to a flexible film article, more particularly to a flexible film article that may be used in various industries.

Conventional Non-woven fabrics in a form of flexible film are easy to manufacture because weaving processes for manufacturing fabrics which are cumbersome are omitted. Specifically, conventional non-woven fabrics are produced by directly feeding polymer raw materials into a manufacturing equipment to obtain finished products. Thus, the conventional non-woven fabrics may be manufactured relatively fast and the cost of making the same is relatively low, so the conventional non-woven fabrics are widely used in many industries. The existing applications of the conventional non-woven fabrics include clothing, medical masks, facial masks and cotton pads used in beauty products, etc. in daily life.

Therefore, an object of the disclosure is to provide a flexible film article to be used in various industries.

According to an aspect of the disclosure, there is provided a flexible film article according to claim 1.

### BRIEF DESCRIPTION OF THE DRAWINGS

Other features and advantages of the disclosure will become apparent in the following detailed description of the embodiment(s) with reference to the accompanying drawings. It is noted that various features may not be drawn to scale.
FIG. 1 is a fragmentary partly sectional view illustrating a manufacturing system for implementing a method for manufacturing a flexible film article of a first embodiment according to the present disclosure.
FIG. 2A is a fragmentary schematic side view illustrating a first layer body of a flexible film article of a first embodiment according to the present disclosure.
FIG. 2B is an optical microscope (OM) image illustrating a top view of microstructures of the first layer body of the flexible film article of the first embodiment.
FIG. 2C is an OM image illustrating a bottom view of microstructures of the first layer body of the flexible film article of the first embodiment.
FIG. 3 is a fragmentary partly sectional view illustrating a manufacturing system for implementing a method for manufacturing a flexible film article of a second embodiment according to the present disclosure.
FIG. 4A is a fragmentary schematic side view illustrating the first layer body of the flexible film article of the second embodiment.
FIG. 4B is a photograph image illustrating an actual appearance of the first layer body of the flexible film article of the second embodiment.
FIG. 5 is a fragmentary schematic side view illustrating a flexible film article of a third embodiment according to the present disclosure.
FIG. 6 is a fragmentary partly sectional view illustrating a manufacturing system for implementing a method for manufacturing a flexible film article of a fourth embodiment according to the present disclosure.
FIG. 7 is a fragmentary schematic side view illustrating the flexible film article of the fourth embodiment.
FIG. 8 is a fragmentary partly sectional view illustrating a manufacturing system for implementing a method for manufacturing a flexible film article of a fifth embodiment according to the present disclosure.
FIG. 9A is a fragmentary schematic side view illustrating the flexible film article of the fifth embodiment.
FIG. 9B is a photograph image illustrating an actual image of the flexible film article of the fifth embodiment.
FIG. 10 is fragmentary partly sectional view illustrating a manufacturing system for implementing a method for manufacturing a flexible film article of a sixth embodiment according to the present disclosure.
FIG. 11A is a fragmentary schematic side view illustrating the flexible film article of the sixth embodiment.
FIG. 11B is a photograph image illustrating an actual appearance of the flexible film article of the sixth embodiment.

### DETAILED DESCRIPTION

Before the disclosure is described in greater detail, it should be noted that where considered appropriate, reference numerals or terminal portions of reference numerals have been repeated among the figures to indicate corresponding or analogous elements, which may optionally have similar characteristics.

It should be noted herein that for clarity of description, spatially relative terms such as "top," "bottom," "upper," "lower," "on," "above," "over," "downwardly," "upwardly" and the like may be used throughout the disclosure while making reference to the features as illustrated in the drawings. The features may be oriented differently (e.g., rotated 90 degrees or at other orientations) and the spatially relative terms used herein may be interpreted accordingly.

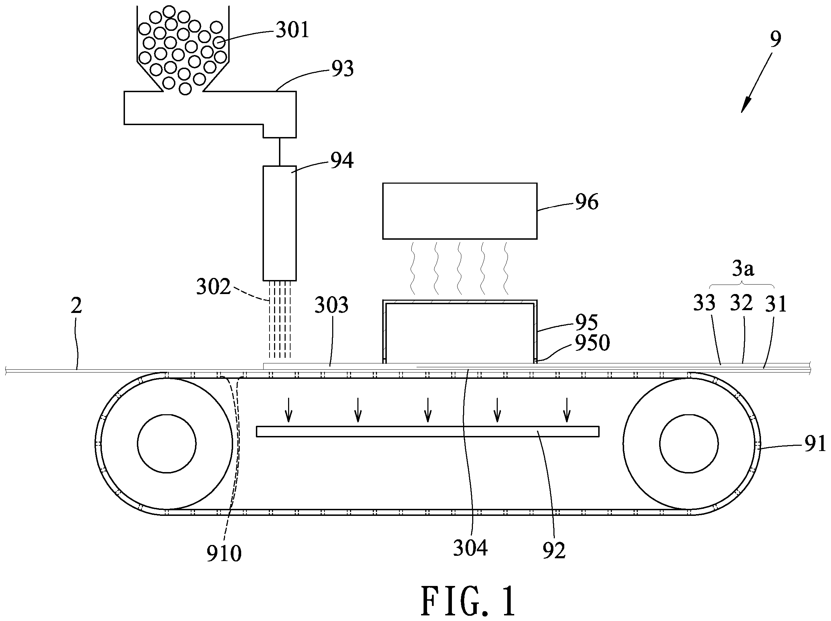

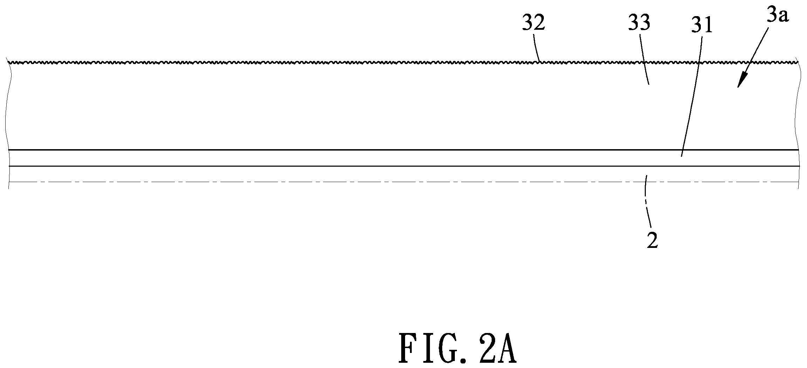

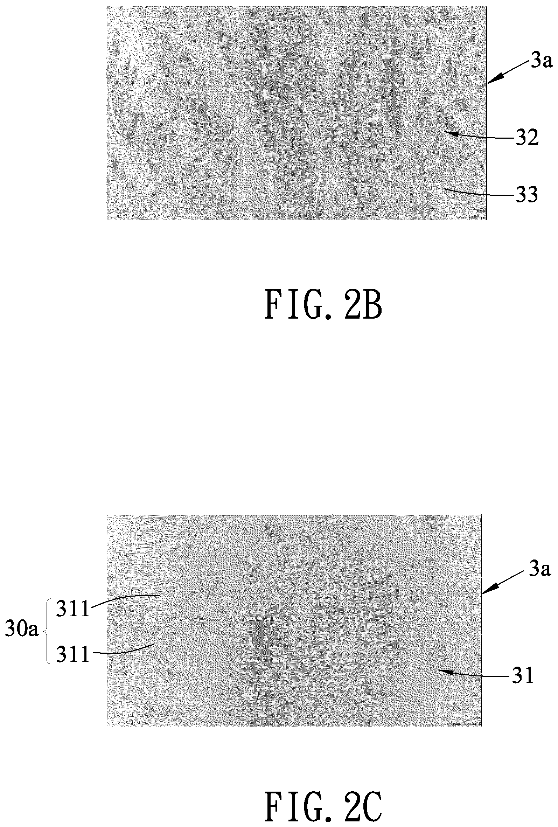

FIG. 1 shows a manufacturing system 9 for implementing a method for manufacturing a flexible film article of a first embodiment according to the present disclosure. FIG. 2 illustrates the flexible film article of the first embodiment made by the method including the following steps: step (a), step (b), step (c), and step (d) that are to be sequentially performed.

As shown in FIG. 1, in step (a), a first release paper 2 is provided on a conveyor belt 91 of the manufacturing system 9 that is formed with a plurality of air holes 910 and that is operable to continuously move. In the first embodiment, a suction device 92 of the manufacturing system 9 is disposed under the conveyor belt 91, such that the first release paper 2 is sucked by the suction device 92 through the air holes 910 when being driven by the conveyor belt 91 to move.

In step (b), a plurality of polymer pellets 301 are first fed into an extruder 93 of the manufacturing system 9 that extrudes the polymer pellets 301 and that delivers the same to a fiber forming device 94 of the manufacturing system 9 to form a plurality of semi-molten thermoplastic fibers 302 or a molten thermoplastic material 302 that are to be provided on the first release tape 2 after step (a) is performed, and the semi-molten thermoplastic fibers 302 or the molten thermoplastic material 302 provided on the first release paper 2 are/is driven by the conveyor belt 91 to move, and form(s) a moving semi-molten thermoplastic fiber layer 303 or a moving molten thermoplastic material layer 303.

In step (c), a cover 95 of the manufacturing system 9 is covered on the moving semi-molten thermoplastic fiber layer 303 or the moving molten thermoplastic material layer 303, and the moving molten thermoplastic fiber layer 303 or the moving molten thermoplastic material layer 303 is heated by a heater 96 of the manufacturing system 9. In the first embodiment of the present disclosure, the cover 95 is formed with a channel 950 through which the moving molten thermoplastic fiber layer 303 or the moving molten thermoplastic material layer 303 passes and the cover 95 covers a peripheral portion above the moving semi-molten thermoplastic fiber layer 303 or the moving molten thermoplastic material layer 303, such that a side 304 of the moving semi-molten thermoplastic fiber layer 303 or the moving molten thermoplastic material layer 303 in the channel 950 is molten by thermal energy supplied by the heater 96. The side 304 of the moving semi-molten thermoplastic fiber layer 303 or the moving molten thermoplastic material layer 303 is in contact with the first release paper 2. It should be noted that since a thermal conductivity of the first release paper 2 is higher than that of the air, the side 304 of the moving semi-molten thermoplastic fiber layer 303 in contact with the first release paper 2 is molten.

In step (d), the moving semi-molten thermoplastic fiber layer 303 or the moving molten thermoplastic material layer 303 on the conveyor belt 91 is moved away from the heater 96 and the first release paper 2 shown in FIGS. 1 and 2A is removed to obtain a first layer body 3a of the flexible film article of the first embodiment. In the first embodiment of the present disclosure, the first layer body 3a of the flexible film article is a sheet body, and has a first surface side 31 that is heated and molten by the heater 96, and a second surface side 32 opposite to the first surface side 31 and having a fibrous structure 33. The first surface side 31 of the first layer body 3a of the flexible film article is formed from the side 304 of the moving semi-molten thermoplastic fiber layer 303 or the moving molten thermoplastic material layer 303.

In step (b) for manufacturing the flexible film article of the first embodiment, the semi-molten thermoplastic fibers 302 and the moving semi-molten thermoplastic fiber layer 303 are exemplified by way of example, but are not limited thereto. The first layer body 3a of the flexible film article of the first embodiment obtained in step (d) is, for example, a non-woven fabric, but is not limited thereto. It should be noted herein that in a case where the molten thermoplastic material 302 and the moving molten thermoplastic material layer 303 are exemplified by way of example in step (b), the first layer body 3a of the flexible film article obtained in step (d) is a fabric in a form of a continuous film.

It can be appreciated from the above descriptions of the method for manufacturing the first embodiment that, the flexible film article of the first embodiment of the present disclosure is shown in FIGS. 2A, 2B and 2C, and includes the first layer body 3a made of thermoplastic material. The first layer body 3a includes the first surface side 31 and the second surface side 32 that are disposed opposite to each other. In the first embodiment, the first surface side 31 has a plurality of smooth regions 311, and the second surface side 32 has the fibrous structure 33. The smooth regions 311 of the first surface side 31 of the first layer body 3a are connected to each other and cooperatively define a first mirror surface 30a that is flat.

Specifically, an actual appearance of the second surface side 32 of the first layer body 3a of the flexible film article of the first embodiment of the present disclosure is shown in FIG. 2B, which is an optical microscope (OM) image illustrating microstructures of the fibrous structure 33 that has a fluffy appearance. FIG. 2C is another OM image illustrating microstructures of the first surface side 31 of the first layer body 3a that is molten by the thermal energy supplied by the heater 96 and that exhibits a relatively smooth appearance. In this embodiment, a porosity of the first surface side 31 of the first layer body 3a of the flexible film article is lower than a porosity of the second surface side 32, so the flexible film article of the first embodiment is both breathable and water-repellent, and is suitable to be used as a single-sided breathable and water-repellent fabric.

While in step (b) for manufacturing the flexible film article of the first embodiment, the semi-molten thermoplastic fibers 302 is provided on the first release paper 2 and the first layer body 3a obtained after step (d) is performed is a non-woven fabric as an example, but the present disclosure is not limited hereto. It should be noted that the semi-molten thermoplastic fibers 302 may be replaced by a fabric (not shown) made of a thermoplastic material and the first layer body 3a having the first mirror surface 30a may also be obtained after step (d) is performed.

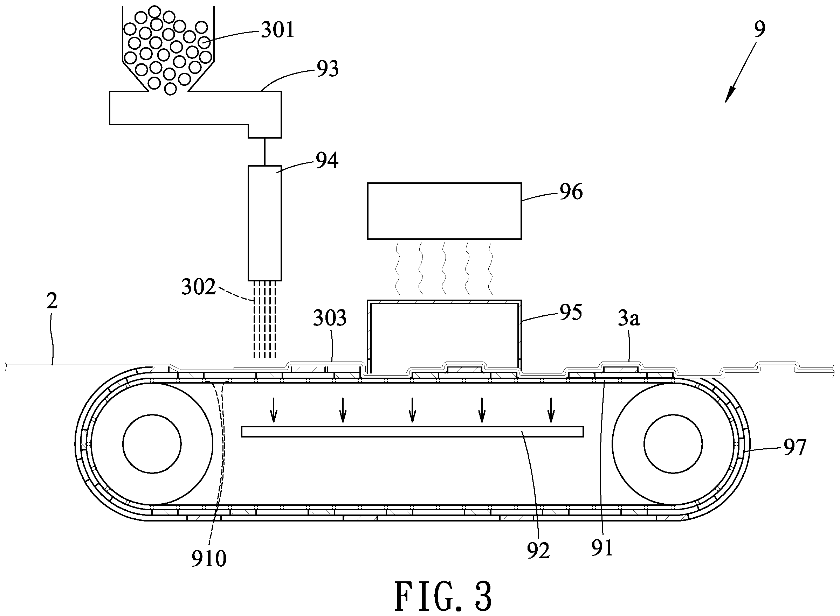

FIG. 3 shows a manufacturing system 9 for implementing a method for manufacturing the flexible film article of a second embodiment according to the present disclosure. The method for manufacturing the second embodiment is similar to that for manufacturing the first embodiment, and the differences therebetween reside in that the method for manufacturing the second embodiment further includes, prior to step (a), a step (a').

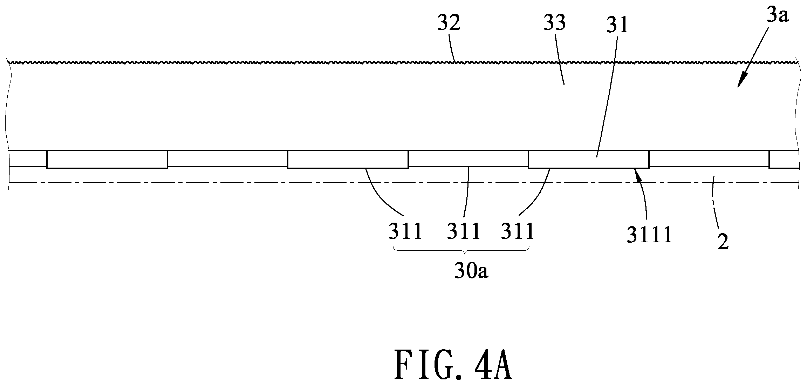

Specifically, as shown in FIG. 3, in step (a'), a forming mold 97 having a first predetermined pattern is disposed on the conveyor belt 91 with a flat side thereof facing the conveyor belt 91, and the forming mold 97 is driven by the conveyor belt 91 to move when being sucked by the suction device 92. In the second embodiment of the present disclosure, the forming mold 97 is an embossing mold having the first predetermined pattern and has a plurality of through holes, and the forming mold 97 may be implemented by a forming device disclosed in Taiwanese Invention Patent Publication No. TW201945209A. Furthermore, in step (a) of the method for manufacturing the second embodiment, a suction force of the suction device 92 is increased as compared to that for manufacturing the first embodiment, so that the first release paper 2 disposed on the forming mold 97 is sucked by the suction device 92 through the through holes of the forming mold 97 and the air holes 910 of the conveyor belt 91 when being driven by the conveyor belt 91 to move, thereby forming a second predetermined pattern on the first release paper 2 that conforms with the first predetermined pattern. Thus, in step (b) of the method for manufacturing the second embodiment, when the semi-molten thermoplastic fibers 302 provided on the first release paper 2 that is disposed on the forming mold 97 are driven by the conveyor belt 91 to move, the moving semi-molten thermoplastic fiber layer 303 forms a third predetermined pattern 3111 conforming with the second predetermined pattern on the first release paper 2. In this way, after step (d) of the method for manufacturing the second embodiment is performed, in which the first release paper 2 shown in FIG. 4A is removed from the moving semi-molten thermoplastic fiber layer 303, the first mirror surface 30a of the first surface side 31 of the first layer body 3a of the flexible film article has the third predetermined pattern 3111 thereon.

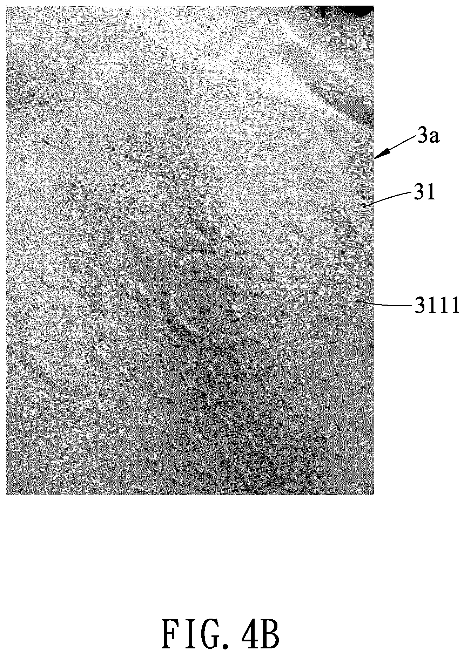

Specifically, an actual appearance of the third predetermined pattern 3111 of the first surface side 31 of the first layer body 3a of the flexible film article of the second embodiment according to the present disclosure is shown in FIG. 4B, which is a photograph image presenting a delicate pattern. Thus, the flexible film article of the second embodiment of the present disclosure has an aesthetic appearance and is suitable for fabricating clothing and home decoration products.

While the third predetermined pattern 3111 formed on the first surface side 31 of the first layer body 3a of the flexible film article of the second embodiment of the present disclosure is formed indirectly by the forming mold 97, it should be noted that the forming mold 97 may be omitted in the manufacturing system 9 for implementing the method for manufacturing the second embodiment, and another first release paper 2 that has the second predetermined pattern is employed in the manufacturing system 9 for implementing the method for manufacturing the first embodiment to directly form the third predetermined pattern 3111 on the first surface side 31 of the first layer body 3a of the flexible film article of the second embodiment. In this way, after step (d) is performed, the flexible film article shown in FIG. 4A and FIG. 4B having the third predetermined pattern 3111 formed on the first surface side 31 of the first layer body 3a thereof may be obtained.

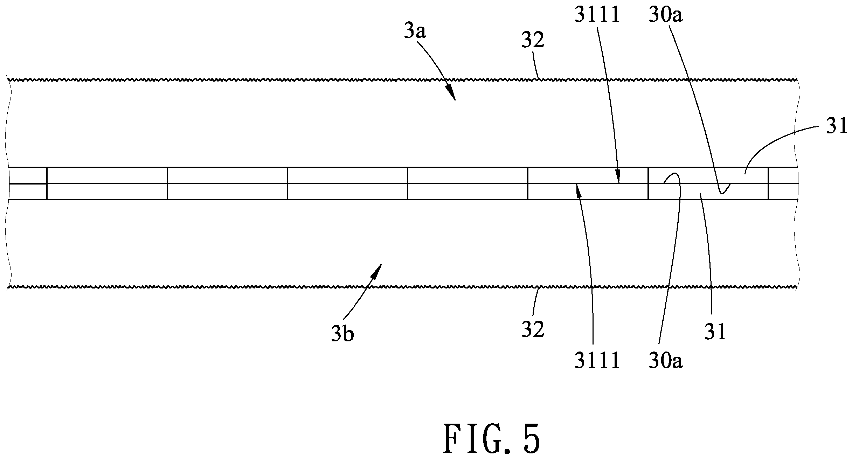

Referring to FIG. 5, the flexible film article of a third embodiment according to the present disclosure is similar to the first embodiment or the second embodiment, and the difference therebetween resides in that the third embodiment further includes another first layer body 3b having a structure of the first layer body 3a of the flexible film article of the first embodiment or the second embodiment. In the third embodiment, the first layer body 3a of the second embodiment is employed as an example of the another first layer body 3b, but is not limited hereto. Specifically, the third predetermined pattern 3111 of the first mirror surface 30a of the first surface side 31 of the another first layer body 3b faces and contacts the third predetermined pattern 3111 of the first mirror surface 30a of the first surface side 31 of the first layer body 3a, and the first layer body 3a and the another first layer body 3b are bonded to each other after being heated.

In addition, the method for manufacturing the flexible film article of the third embodiment according to the present disclosure is similar to the first embodiment or the second embodiment, and the difference therebetween resides in that the method for manufacturing the third embodiment further includes, after step (d), step (e') and step (f') that are to be sequentially performed. In this embodiment, the method for manufacturing the flexible film article of the third embodiment according to the present disclosure is similar to the method for manufacturing the second embodiment, but is not limited thereto.

Specifically, step (d') is to remove, after step (d), the first layer body 3a of the flexible film article obtained in step (d) from the conveyor belt 91. In step (e') of the method for manufacturing the third embodiment, the third predetermined pattern 3111 of the first surface side 31 of a segment of the first layer body 3a is disposed to face and contact the third predetermined pattern 3111 of the first surface side 31 of another segment of the first layer body 3a, or the third predetermined pattern 3111 of the first surface side 31 of the another first layer body 3b is disposed to face and contact the third predetermined pattern 3111 of the first surface side 31 of the first layer body 3a. In step (f') of the method for manufacturing the third embodiment, the segment and the another segment of the first layer body 3a or the first layer body 3a and the another first layer body 3b are heated such that the third predetermined patterns 3111 are molten and thus the segment and the another segment of the first layer body 3a or the first layer body 3a and the another first layer body 3b are bonded to each other.

It should be noted that, a glue or adhesive is usually applied between two conventional non-woven fabrics to connect the conventional non-woven fabrics together because the conventional non-woven fabrics usually have a fluffy structure at both sides thereof. In contrast thereto, in the flexible film article of the first embodiment or the second embodiment according to the present disclosure, the first surface side 31 of the first layer body 3a of the flexible film article is flat and smoother than the fibrous structure 33 of the second surface side 32 of the first layer body 3a of the flexible film article. Thus, as described in the third embodiment, the segment and the another segment of the first layer body 3a or the first layer body 3a and the another first layer body 3b may be simply disposed to face and contact each other, and then be heated to melt the first surface sides 31 thereof to bond the same to each other. The process of bonding of the flexible film articles is simplified, and no glue or adhesive is used between the flexible film articles. It should be noted herein that, the first surface sides 31 of the segment and the another segment of the first layer body 3a or the first surface sides 31 of the first layer body 3a and the another first layer body 3b have a relatively low breathability, and the second surface sides 32 of the same have a fluffy and soft touch. Thus, the flexible film article of the third embodiment may be used as a warm material fabric. It should be further noted that, since the segment and the another segment of the first layer body 3a or the first layer body 3a and the another first layer body 3b are disposed to face and contact each other and are heated to melt the first surface sides 31 thereof that are contact with each other, the material of the first surface sides 31 of the third embodiment that are in contact with each other is the same, which is different from the conventional non-woven fabrics that are connected together by glue or adhesive and the conventional non-woven fabrics thus obtained includes different materials, i.e., glue and thermoplastic material. In this way, when the flexible film article of the third embodiment made of the same material (thermoplastic) is to be recycled and reused, the purity and reuse rate of recycle may be greatly increased as compared to the conventional non-woven fabrics.

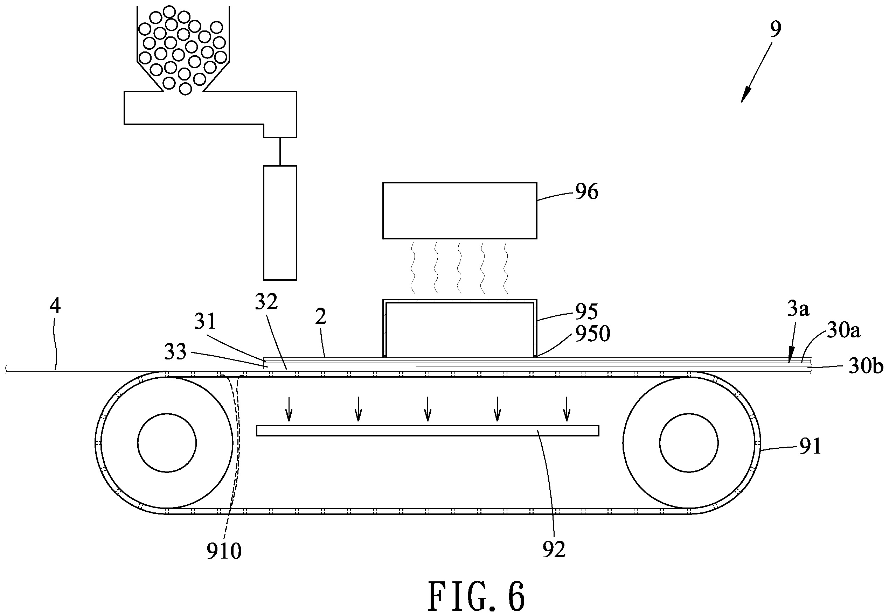

FIG. 6 shows a manufacturing system 9 for implementing a method for manufacturing the flexible film article of a fourth embodiment according to the present disclosure. The method for manufacturing the fourth embodiment is similar to that for manufacturing the first embodiment, and the differences therebetween reside in that the method for manufacturing the fourth embodiment further includes step (e"), step (f"), step (g"), and step (h").

In step (d"), the first layer body 3a is removed from the conveyor belt 91 before the first release paper 2 is removed from the first layer body 3a, and then the first layer body 3a is flipped upside down such that the fibrous structure 33 of the second surface side 32 faces the conveyor belt 91.

In step (e"), a second release paper 4 is provided on the conveyor belt 91, and is also sucked by the suction device 92 through the air holes 910 when being driven by the conveyor belt 91 to move so the second release paper 4 is attached on the conveyor belt 91.

In step (f"), the first layer body 3a obtained in step (d") is provided on the second release paper 4 after step (e"), so that the second surface side 32 of the first layer body 3a is in contact with the second release paper 4, and the first layer body 3a disposed on the second release paper 4 is also driven by the conveyor belt 91 to move.

In step (g"), the cover body 95 is covered on the first layer body 3a after step (f"), and the first layer body 3a is heated by the heater 96. In the method for manufacturing the fourth embodiment of the present disclosure, the cover 95 covers a peripheral portion above the first layer body 3a, such that the second surface side 32 of the first layer body 3a in the channel 950 is molten by the thermal energy supplied by the heater 96.

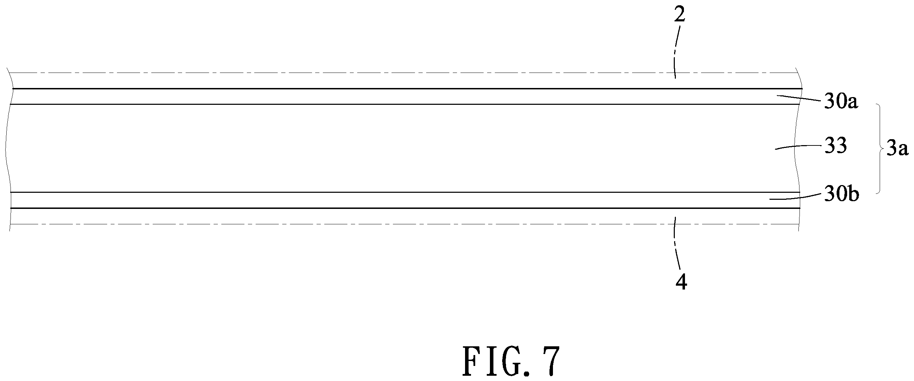

As shown in FIG. 7, in step (h"), the first layer body 3a on the conveyor belt 91 is moved away from the heater 96 and the first release paper 2 and the second release paper 6 shown in FIG. 6 are removed from the first layer body 3a. In step (g"), the second surface side 32 of the first layer body 3a is molten and is then solidified to form a second mirror surface 30b connected to the fibrous structure 33 so that the fibrous structure 33 of the first layer body 3a is disposed between the first surface side 31 and the second mirror surface 30b. That is to say, a portion of the fibrous structure 33 of the second surface side 32 that is opposite to the first surface side 31 of the first layer body 3a of the flexible film article of the fourth embodiment is heated, molten and solidified to form the second mirror surface 30b.

It can be appreciated from the description of the fourth embodiment of the present disclosure that the fibrous structure 33 disposed between the first surface side 31 and the second mirror surface 30b provide a breathable function for the flexible film article, and the first surface side 31 and the second mirror surface 30b provide a water-repellent function for the flexible film article of the fourth embodiment. Thus, the flexible film article of the fourth embodiment according to the present disclosure is suitable to be used as a breathable and double-sided water-repellent fabric.

Although the fourth embodiment of the present disclosure is exemplified to obtain the flexible film article shown in FIG. 7 (that is to say, the first layer body 3a having the first mirror surface 30a and the second mirror surface 30b), it should be noted herein that the flexible film article of the fourth embodiment may be further processed by the method for manufacturing the flexible film article of the third embodiment. Specifically, the first layer body 3a of the fourth embodiment is first cut into a plurality of segments, and the first mirror surfaces 30a (or the second mirror surfaces 30b) of the segments are disposed to face and contact each other, and are then heated, thereby bonding the segments at the first mirror surfaces 30a (or the second mirror surfaces 30b) that contact each other. The flexible film article thus obtained may be used for filtering and can withstand water pressure.

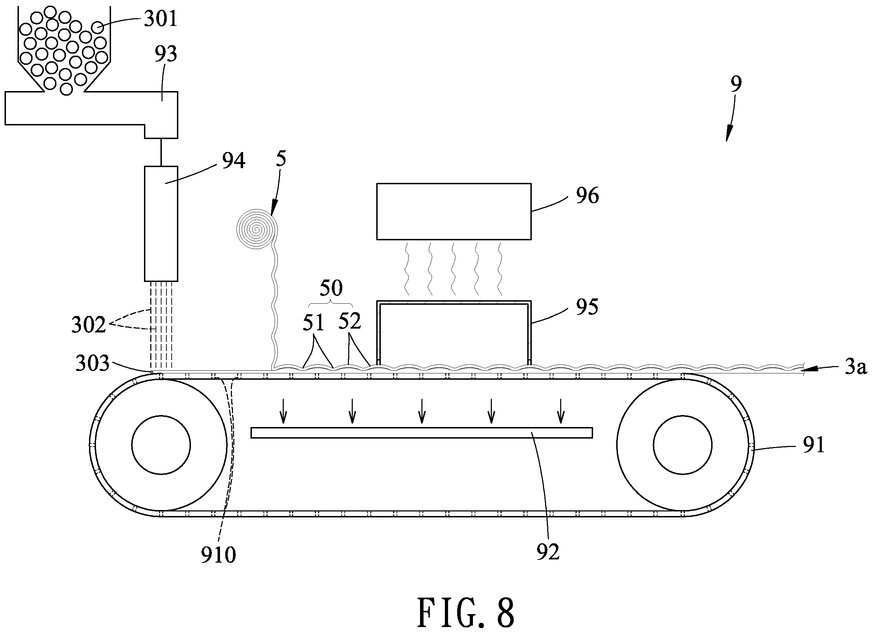

FIG. 8 is a manufacturing system 9 for implementing a method for manufacturing the flexible film article of a fifth embodiment according to the present disclosure. The method for manufacturing the fifth embodiment is similar to the method for manufacturing the first embodiment, and the differences therebetween reside in the following. The method for manufacturing the flexible film article of the fifth embodiment according to the present disclosure includes the following steps: step (A); step (B); step (C); and a step (D) that are to be sequentially performed.

As shown in FIG. 8, in step (A), a plurality of polymer pellets 301 are first fed into the extruder 93 of the manufacturing system 9 that extrudes the polymer pellets 301 and then that delivers the same to the fiber forming device 94 to form the semi-molten thermoplastic fibers 302 that are to be provided on the conveyor belt 91, and the semi-molten thermoplastic fibers 302 provided on the conveyor belt 91 are driven by the conveyor belt 91 to move, and form a moving semi-molten thermoplastic fiber layer 303. The moving semi-molten thermoplastic fiber layer 303 is sucked by the suction device 92 that is disposed under the conveyor belt 91 so as to be attached on the conveyor belt 91.

In step (B), a third release paper 5 is provided on the moving semi-molten thermoplastic fiber layer 303 such that the third release paper 5 provided on the moving semi-molten thermoplastic fiber layer 303 is indirectly driven by the conveyor belt 91 to move. The third release paper 5 has a plurality of recess portions 51 and a plurality of protruding portions 52 spaced apart from each other and each of the protruding portions 52 is adjacent to at least one of the recess portions 51. Specifically, the recess portions 51 and the protruding portions 52 are alternately disposed. During step (B) is performed, each of the recess portions 51 of the third release paper 5 contacts the moving semi-molten thermoplastic fiber layer 303, and each of the protruding portions 52 of the third release paper 5 does not contact the moving semi-molten thermoplastic fiber layer 303.

Step (C) is performed after step (B). In step (C), the cover body 95 is covered on the third release paper 5 and the moving semi-molten thermoplastic fiber layer 303 is heated by the heater 96. The cover 95 covers a peripheral portion above the third release paper 5, such that a side of the moving semi-molten thermoplastic fiber layer 303 in contact with the third release paper 5 is molten.

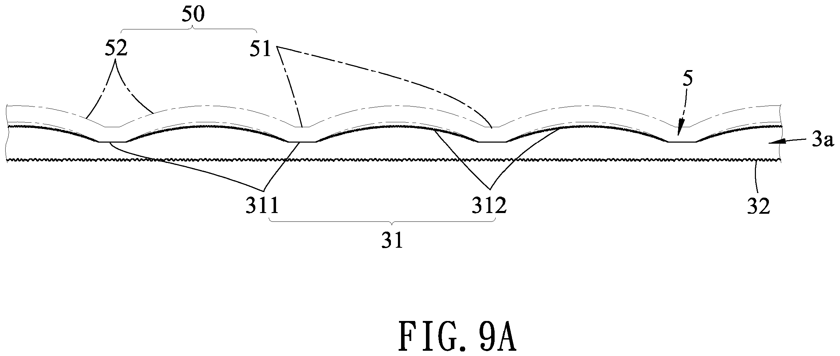

In step (D), the moving semi-molten thermoplastic fiber layer 303 is moved away from the heater 96 and is then solidified to form the first layer body 3a of the flexible film article of the fifth embodiment. As shown in FIG. 9A, a portion of the first surface side 31 of the first layer body 3a contacts the third release paper 5, and the first surface side 31 of the first layer body 3a further has a plurality of rough regions 312 spaced apart from each other. Each of the rough regions 312 has a periphery adjacent to at least one of the smooth regions 311. Each of the smooth regions 311 is recessed and each of the rough regions 312 is ridged relative to the smooth regions 311. Each of the smooth regions 311 of the first layer body 3a protrudes toward the second surface side 32 and corresponds in position to molten portions of the moving semi-molten thermoplastic fiber layer 303 that is heated in step (C). When the flexible film article of the fifth embodiment is to be used, the third release paper 5 is removed.

It should be noted that, in step (B), the recess portions 51 of the third release paper 5 are also sucked by the suction device 92 through the air holes 910 to move toward and press the moving semi-molten thermoplastic fiber layer 303. In this way, after step (D) is performed, the smooth regions 311 of the first surface side 31 of the first layer body 3a protrude toward the second surface side 32, such that the flexible film article of the fifth embodiment according to the present disclosure has a concave-convex structure through the smooth regions 311 and the rough regions 312.

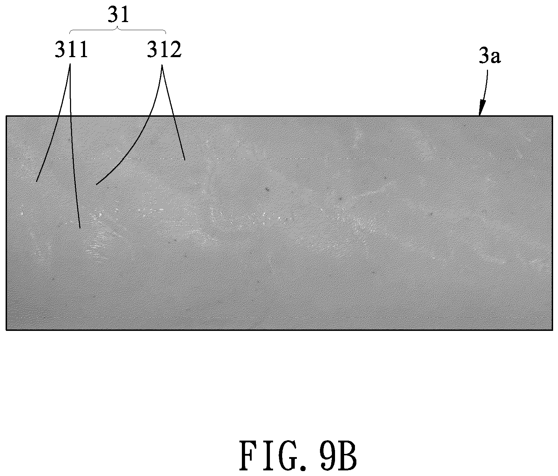

Specifically, the recess portions 51 and the protruding portions 52 of the third release paper 5 cooperatively define a fourth predetermined pattern 50 of the third release paper 5. Thus, after step (D) is performed, the first surface side 31 of the first layer body 3a is formed with a pattern that conforms with the fourth predetermined pattern 50 of the third release paper 5. Referring to FIG. 9B, the pattern thus formed on the first surface side 31 of the first layer body 3a by the fourth predetermined pattern 50 is, e.g., a cloud pattern.

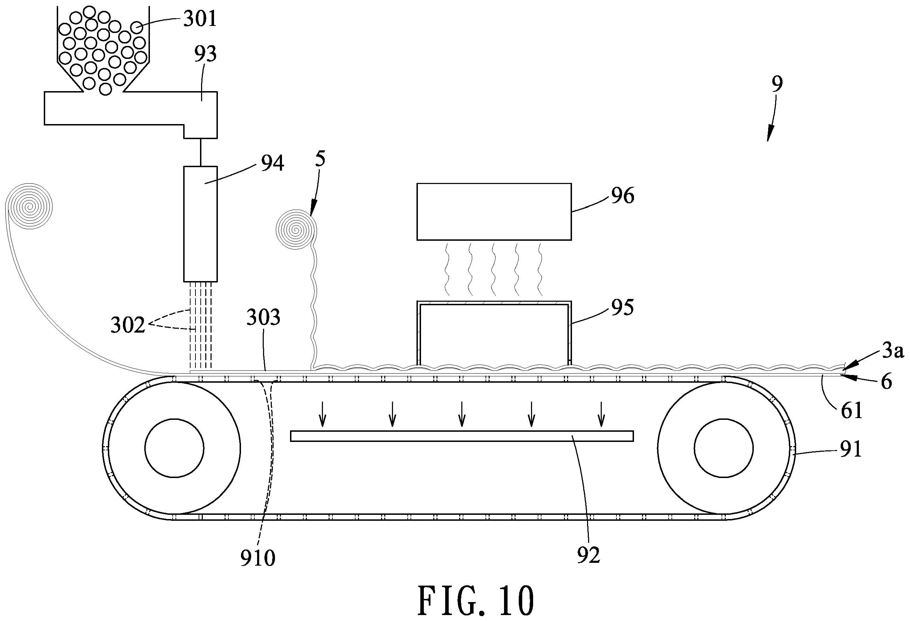

Referring to FIG. 10, a manufacturing system 9 for implementing a method for manufacturing the flexible film article of a sixth embodiment according to the present disclosure is shown. The method for manufacturing the sixth embodiment is similar to that for manufacturing the fifth embodiment, and the differences therebetween reside in that the method for manufacturing the sixth embodiment further includes, prior to step (A), a step (A'). In step (A'), a second layer 6 having a fifth predetermined pattern 61 is provided on the conveyor belt 91 such that the second layer 6 is sucked by the suction device 92 when being driven by the conveyor belt 91 to move. It should be noted that, in this embodiment, the fourth predetermined pattern 50 defined by the recess portions 51 and the protruding portions 52 of the third release paper 5 is a mesh pattern.

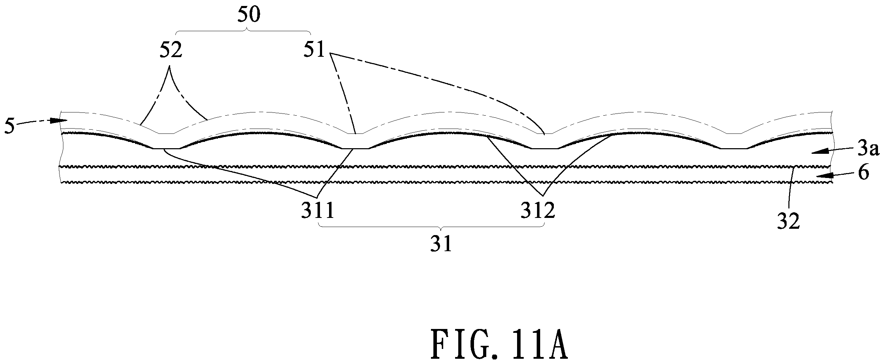

Specifically, the second layer 6 is provided on the conveyor belt 91 before the moving semi-molten thermoplastic fiber layer 303 is solidified to form the first layer body 3a. As shown in FIG. 11A, after step (D) of the method for manufacturing the sixth embodiment of the present disclosure is performed, the flexible film article thus obtained includes the second layer body 6 having the fifth predetermined pattern 61. The second layer body 6 is overlapped by the first layer body 3a and is connected to the second surface side 32 of the first layer body 3a. In the sixth embodiment of the present disclosure, the second layer body 6 is made of a non-woven fabric.

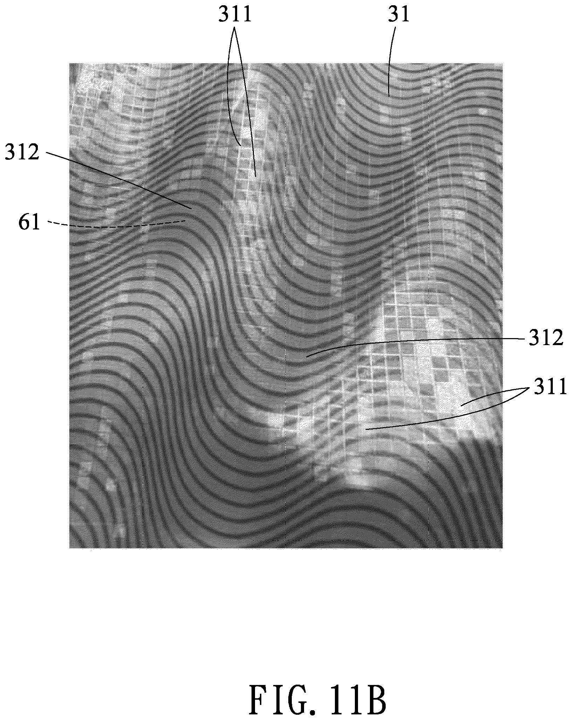

FIG. 11B shows an actual appearance of the flexible film article of the sixth embodiment according to the present disclosure. As shown in FIGS. 11A and 11B, the fifth predetermined pattern 61 of the second layer body 6 is a plurality of wavy lines sequentially arranged, and the mesh pattern of the fourth predetermined pattern 50 of the third release paper 5 is formed on the first surface side 31 of the first layer body 3a. The fifth predetermined pattern 61 of the second layer 6 has a plurality of sections, and a portion of the sections has a color different from a color of another portion of the sections. For example, a portion of the sections is yellow, another portion of the sections is blue, and still another portion of the sections is red. Furthermore, the fifth predetermined pattern 61 of the second layer body 6 is visible through at least a portion of the first surface side 31 of the first layer body 3a. In this embodiment, as shown in FIG. 11B, the wavy lines of the fifth predetermined pattern 61 of the second layer body 6 is clearly visible through the rough regions 312, while the wavy lines of the fifth predetermined pattern 61 of the second layer body 6 is barely visible through the smooth regions 311. That is to say, visibility of the fifth predetermined pattern 61 of the second layer body 6 through the rough regions 312 of the first surface side 31 of the first layer body 3a is higher than visibility of the fifth predetermined pattern 61 of the second layer body 6 through the smooth regions 311 of the first surface side 31 of the first layer body 3a.

It should be noted that although the fourth predetermined pattern 50 of the third release paper 5 and the fifth predetermined pattern 61 of the second layer 6 of the sixth embodiment according to the present disclosure are respectively exemplified by the mesh pattern and the wavy lines, the present disclosure is not limited thereto. For example, the fourth predetermined pattern 50 of the third release paper 5 may be a leather texture pattern, and the fifth predetermined pattern 61 of the second layer 6 may be a snakeskin pattern. Thus, in one aspect of the sixth embodiment, the first surface side 31 of the first layer body 3a of the flexible film article may appear to have a snakeskin pattern with a leather texture.

It can be appreciated from the description of the fifth embodiment and the sixth embodiment of the present disclosure that, after step (D) is performed, the first surface side 31 of the first layer body 3a is formed with the pattern conforming with the fourth predetermined pattern 50 defined by the recess portions 51 and the protruding portions 52 of the third release paper 5. That is to say, the recess portions 51 of the third release paper 5 respectively correspond in position to the smooth regions 311 of the first surface side 31 of the first layer body 3a, and the protruding portions 52 of the third release paper 5 respectively correspond in position to the rough regions 312 of the first surface side 31 of the first layer body 3a. Furthermore, the wavy lines and different colors of the fifth predetermined pattern 61 of the second layer body 6 may be visible or barely visible through the rough regions 312 or the smooth regions 311 of the first surface side 31 of the first layer body 3a, so the flexible film article may be useful in various applications.

In sum, the flexible film article of the present disclosure may provide a single-sided breathable and water-repellent fabric, and a double-sided breathable, water-repellent and warm material fabric that are suitable for fabricating clothing and home decoration products. In addition, since the first surface side 31 of the first layer body 3a has the concave-convex structure and is textured visually, and the fifth predetermined pattern 61 of the second layer body 6 is visible in some parts and barely visible in other parts through the first surface side 31 of the first layer body 3a, applications of the flexible film article of the present disclosure may be further increased.

In the description above, for the purposes of explanation, numerous specific details have been set forth in order to provide a thorough understanding of the embodiment(s). It will be apparent, however, to one skilled in the art, that one or more other embodiments may be practiced without some of these specific details. It should also be appreciated that reference throughout this specification to "one embodiment," "an embodiment," an embodiment with an indication of an ordinal number and so forth means that a particular feature, structure, or characteristic may be included in the practice of the disclosure. It should be further appreciated that in the description, various features are sometimes grouped together in a single embodiment, figure, or description thereof for the purpose of streamlining the disclosure and aiding in the understanding of various inventive aspects; such does not mea that every one of these features needs to be practiced with the presence of all the other features. In other words, in any described embodiment, when implementation of one or more features or specific details does not affect implementation of another one or more features or specific details, said one or more features may be singled out and practiced alone without said another one or more features or specific details. It should be further noted that one or more features or specific details from one embodiment may be practiced together with one or more features or specific details from another embodiment, where appropriate, in the practice of the disclosure.

## Claims

1. A flexible film article, comprising:
a first layer body (3a) that is a sheet body made of a thermoplastic material, and has
a first surface side (31) formed with a plurality of smooth regions (311), said flexible film article **characterized in that** said first layer body (3a) has
a second surface side (32) opposite to said first surface side (31) and having a fibrous structure (33).

2. The flexible film article as claimed in claim 1, wherein said plurality of smooth regions (311) of said first surface side (31) of said first layer body (3a) are connected to each other and cooperatively define a first mirror surface (30a).

3. The flexible film article as claimed in claim 2, wherein said first mirror surface (30a) of said first surface side (31) of said first layer body (3a) has a predetermined pattern.

4. The flexible film article as claimed in claim 2 or 3, further comprising another first layer body (3b) that is identical in structure to said first layer body (3a), wherein said first mirror surface (30a) of said first surface side (31) of said another first layer body (3b) faces and contacts said first mirror surface (30a) of the first surface side (31) of said first layer body (3a), and said another first layer body (3b) and said first layer body (3a) are bonded to each other after being heated.

5. The flexible film article as claimed in claim 3, further comprising another first layer body (3b) that is identical in structure to said first layer body (3a), wherein the predetermined pattern of said first mirror surface (30a) of said first surface side (31) of said another first layer body (3b) faces and contacts the predetermined pattern of said first mirror surface (30a) of said first surface side (31) of said first layer body (3a), and said another first layer body (3b) and said first layer body (3a) are bonded to each other after being heated.

6. The flexible film article as claimed in claim 2, wherein the fibrous structure (33) of said second surface side (32) has a second mirror surface (30b) formed by heating, molting, and then solidifying.

7. The flexible film article as claimed in any one of claims 1 to 6, wherein said first surface side (31) of the first layer body (3a) further has a plurality of rough regions (312) spaced apart from each other, each of said plurality of rough regions (312) being adjacent to at least one of said plurality of smooth regions (311), each of said plurality of smooth regions (311) being recessed and each of said plurality of rough regions (312) being ridged relative to said plurality of smooth regions (311), such that said first surface side (31) of said first layer body (3a) has a concave- and-convex structure through said plurality of smooth regions (311) and said plurality of rough regions (312).

8. The flexible film article as claimed in claim 7, further comprising a second layer body (6) that has a predetermined pattern, that is overlapped by said first layer body (3a), and that is connected to said second surface side (32) of said first layer body (3a), said predetermined pattern of said second layer body (6) being visible through at least a portion of said first surface side (31) of said first layer body (3a).

9. The flexible film article as claimed in claim 8, wherein visibility of the predetermined pattern of said second layer body (6) through said rough regions (312) of said first surface side (31) of said first layer body (3a) is higher than visibility of the predetermined pattern of said second layer body (6) through said plurality of smooth regions (311) of said first surface side (31) of said first layer body (3a).

10. The flexible film article as claimed in claim 8 or 9, wherein the predetermined pattern of said second layer (6) has a plurality of sections, a portion of said sections having a color different from a color of another portion of said plurality of sections.
